# EUROPEAN PATENT SPECIFICATION

(11) **EP 3 160 016 B1**
(45) Date of publication and mention of the grant of the patent: **15.05.2019**
(21) Application number: 16823150.4
(22) Date of filing: 11.03.2016
(51) Int. Cl.: H02K 3/28, H01F 5/00, H02K 3/04

(54) **CENTRALLY-DISTRIBUTED CORELESS WINDING**
ZENTRAL VERTEILTE KERNLOSE WICKLUNG
ENROULEMENT SANS NOYAU RÉPARTI DE MANIÈRE CENTRALE

(30) Priority: 14.07.2015 CN 201510412976
(43) Date of publication of application: 26.04.2017
(73) Proprietor: Shanghai Moons' Electric Co., Ltd, Shanghai 201107 (CN)
(72) Inventor: JIN, Wanbing, Shanghai 201107 (CN); TANG, Binsong, Shanghai 201107 (CN); NIE, Huifan, Shanghai (CN); HE, Xin, Shanghai 201107 (CN)
(74) Representative: Winter, Brandl, Fürniss, Hübner, Röss, Kaiser, Polte - Partnerschaft mbB
(86) International application number: PCT/CN2016/076101
(87) International publication number: WO 2017/008518

(56) References cited:
- EP-A2- 0 900 398
- CN-A- 1 960 129
- CN-U- 204 886 483
- JP-A- S60 170 448
- JP-A- 2005 085 560
- US-A- 3 995 364
- ANTONIO MASSARINI ET AL: "Self-Capacitance of Inductors", IEEE TRANSACTIONS ON POWER ELECTRONICS, INSTITUTE OF ELECTRICAL AND ELECTRONICS ENGINEERS, USA, vol. 12, no. 4, 1 July 1997 (1997-07-01), XP011043081, ISSN: 0885-8993

## Description

The present invention relates to a winding, and more particularly, to a centrally-distributed coreless winding.

Related prior art is disclosed in US 3,995,364 A, disclosing a method of winding a tubular-shaped multilayer coil used as an ironless rotor in electrical motors, comprising the steps of winding at least one insulated wire around a cylindrical form having a rhomboidal cross-section, providing taps while winding said wire on said form after a number windings corresponding to an integral fraction of the desired total number of windings on said form have been completed, removing the windings from said form, deforming said windings to a bandlike structure, bending said structure to a tubular-shaped coil and joining the ends of said coil, the wire being wound on said form in a multilayer formation by alternating the direction of axial advancement of said windings at least twice between adjacent terminals of said the cylindrical winding. Further of prior art is disclosed in JP 2005-085560 A, EP 0900398 A2 and the article of Antonio Massarini and Marian Kazimierczuk with the title "Self-Capacitance of Inductors", having the ISSN-number 0885/8993 vol. 12, No. 4 of July 1, 1997.

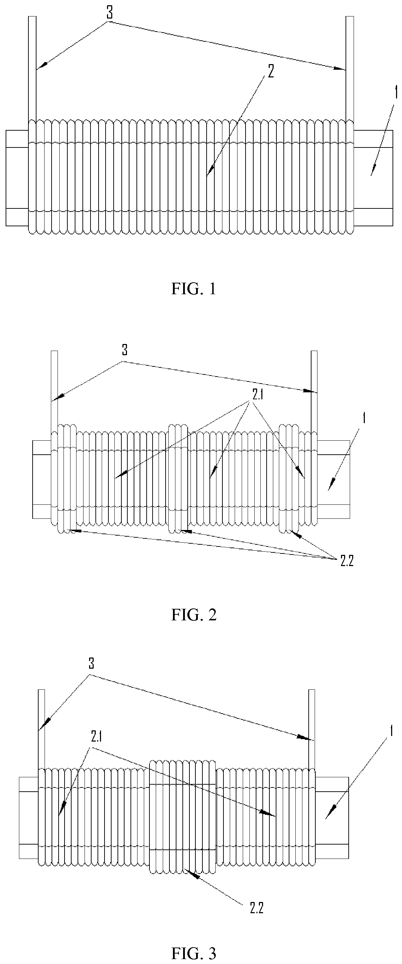

In the winding process of a conventional coreless motor, generally, conductors 2 are evenly wound around a winding die 1, and winding taps 3 are located on both ends of a coil, as shown in FIG. 1, thus forming a coreless winding upon hot crushing and heat forming. In this arrangement, when the counter electromotive force (EMF) on the conductors is projected to the center line, the vector counter EMF near the center line is much larger than the vectors on both sides since the conductors are spatially evenly-distributed within 120°.

When the serial turn number per coil of the coreless winding or the diameter of the coil increases, the conductors of the same layer cannot be wound on the space of one layer, which will inevitably lead to dislocation of the conductors since the length of the winding die is limited, as shown in FIG. 2. Besides, a staggered-layer phenomenon also probably occurs in consideration of the accuracy of the stroke of a winding machine. In FIG. 2, 2.2 are staggered conductors having a first end and a second end and wound around a longitudinal axis of the winding in at least two layers and 2.1 are normal conductors, which are not staggered and which are wound around a longitudinal axis of the winding in a single layer. For the conductors 2.2, the conductors 2.1 and the staggered conductors 2.2 can be distributed at 120° (including but not limited to 120°) by a conventional winding method, but the even distribution of the staggered conductors over the winding cannot make the counter EMF generated by the staggered conductors be effectively used, so that the counter EMF generated by the conductors located far away from the center line of the winding is smaller than that of the conductors near the center line of the winding.

The objective of the present invention is to provide a concentrically-distributed coreless winding which overcomes the drawbacks of the prior art described above.

To achieve the objective, the present invention adopts the following technical solution:

A centrally-distributed coreless winding, wherein, comprising staggered conductors, normal conductors and winding taps, where the staggered conductors are in the middle portion of the winding, the normal conductors are distributed on both sides of the staggered conductors, and the winding taps are located on both ends of the normal conductors. The density in the middle portion of the winding is greater than that of the normal conductors.

The number of the staggered conductors is 1/10 to 1/2 of normal conductors.

Preferably, the number of the staggered conductors is 1/4 of the normal conductors.

The density of conductors of the winding gradually gets smaller from the middle to both sides.

The number of conductors of the staggered conductors is directly proportional to the inner diameter of the coiled winding.

Compared with the prior art, the advantages of the present invention are as below:
1) Based on the counter EMF vector diagram of the coreless motor, the method is proposed to increase the density in the middle of the coil by reducing the conductors' density on both sides of the coil away from the middle of the winding die. By this method, the counter EMF of the coreless motor is effectively enhanced and the performance of the motor is further improved, under the premise that the motor's structure and the number of winding turns do not change;
2) the increased number of conductors in the middle of the coil is subject to the size of the coiled winding, so that it prevents other safety risks resulting from an infinite expansion;
3) the method does not require the modification of equipment, so that engineering can easily be achieved by debugging the winding process of a winding machine.

FIG. 1 is a winding structure diagram of the conventional coreless motor;
FIG. 2 is a winding structure diagram of the existing staggered conductors;
FIG. 3 is a structural diagram of the present invention.

The present invention is further detailed in combination with the drawings and embodiments as follows.

As shown in FIG. 3, a centrally-distributed coreless winding comprises staggered conductors 2.2, normal conductors 2.1 and winding taps 3, wherein the staggered conductors 2.2 are in the middle portion of the winding, the normal conductors 2.1 are distributed on both sides of the staggered conductors 2.2, and the winding taps 3 are located on both ends of the normal conductors 2.1; the coils' density in the middle portion of the winding where the staggered conductors 2.2 are located is greater than that of the normal conductors 2.1.

The number of the staggered conductors 2.2 is 1/10 to 1/2 of normal conductors 2.1.Preferably, the number of the staggered conductors 2.2 is 1/4 of the normal conductors 2.1.

The density of conductors of the winding gradually gets smaller from the middle to both sides. The number of conductors of the staggered conductors 2.2 is directly proportional to the inner diameter of the coiled winding.

The present invention proposes a solution that conductors could be concentrated near the middle of the coil so that the conductors of the formed coil can be distributed in a sparse-concentrated-sparse state. It is easy to understand from the counter EMF vector diagram that the counter EMF utilization of these conductors can be enhanced upon concentration of the staggered conductors 2.2 in the middle of the coil. Reducing the density of the coil on both sides while increasing the corresponding number of conductors to the middle of the coil can effectively improve the counter EMF of the coreless winding to enhance the motor's electromagnetic performance under the same structure and the same number of turns. However, the increased number of conductors in the middle of the coil is subject to the size of the coiled winding.

## Claims

1. A centrally-distributed coreless winding, comprising staggered conductors (2.2) having a first end and a second end and wound around a longitudinal axis of the winding in at least two layers, normal conductors (2.1) which are not staggered and which are wound around a longitudinal axis of the winding in a single layer, and winding taps (3) located on both ends of the normal conductors (2.1), wherein the staggered conductors (2.2) are in the middle portion of the winding in the longitudinal direction of the winding, between the first tap and the first end of the staggered conductors (2.2) and between the second tap and the second end of the staggered conductors (2.2), the normal conductors (2.1) being distributed on both sides of the staggered conductors (2.2); the density in the middle portion of the winding being greater than that of normal conductors (2.1).

2. The centrally-distributed coreless winding as claimed in Claim 1, wherein the number of the staggered conductors (2.2) is 1/10 to 1/2 of the normal conductors (2.1).

3. The centrally-distributed coreless winding as claimed in Claim 2, wherein the number of staggered conductors (2.2) is preferably 1/4 of the normal conductors (2.1).

4. The centrally-distributed coreless winding as claimed in Claim 1, wherein the density of conductors (2.1, 2.2) of the winding gradually gets smaller from the middle to both sides.

5. The centrally-distributed coreless winding as claimed in Claim 1, wherein the number of conductors of the staggered conductors (2.2) is directly proportional to the inner diameter of the coiled winding.

## Patentansprüche

1. Zentral verteilte kernlose Wicklung, umfassend versetzte Leiter (2.2) mit einem ersten Ende und einem zweiten Ende, die in mindestens zwei Lagen um eine Längsachse der Wicklung gewickelt sind, normale Leiter (2.1), die nicht versetzt sind und in einer einzelnen Lage um die Längsachse der Wicklung gewickelt sind, und Wicklungsanschlüsse (3), die an beiden Enden der normalen Leiter (2.1) angeordnet sind, wobei die versetzten Leiter (2.2) sich im mittleren Abschnitt der Wicklung in der Längsrichtung der Wicklung, zwischen dem ersten Anschluss und dem ersten Ende der versetzten Leiter (2.2) und zwischen dem zweiten Anschluss und dem zweiten Ende der versetzten Leiter (2.2) befinden, wobei die normalen Leiter (2.1) auf beiden Seiten der versetzten Leiter (2.2) verteilt sind; die Dichte im mittleren Abschnitt der Wicklung größer als diejenige der normalen Leiter (2.1) ist.

2. Zentral verteilte kernlose Wicklung nach Anspruch 1, wobei die Anzahl der versetzten Leiter (2.2) 1/10 bis 1/2 der normalen Leiter (2.1) beträgt.

3. Zentral verteilte kernlose Wicklung nach Anspruch 2, wobei die Anzahl der versetzten Leiter (2.2) vorzugsweise 1/4 der normalen Leiter (2.1) beträgt.

4. Zentral verteilte kernlose Wicklung nach Anspruch 1, wobei die Dichte der Leiter (2.1, 2.2) der Wicklung von der Mitte zu beiden Seiten hin schrittweise abnimmt.

5. Zentral verteilte kernlose Wicklung nach Anspruch 1, wobei die Anzahl der Leiter der versetzten Leiter (2.2) direkt proportional zum Innendurchmesser der gewickelten Wicklung ist.

## Revendications

1. Enroulement sans noyau distribué centralement, comprenant des conducteurs espacés (2.2) ayant une première extrémité et une seconde extrémité et étant enroulés autour d'un axe longitudinal de l'enroulement dans au moins deux couches, des conducteurs normaux (2.1) qui ne sont pas espacés et qui sont enroulés autour d'un axe longitudinal de l'enroulement dans une seule couche et des prises d'enroulement (3) situées sur les deux extrémités des conducteurs normaux (2.1), dans lequel les conducteurs espacés (2.2) sont dans la partie intermédiaire de l'enroulement suivant la direction longitudinale de l'enroulement, entre la première prise et la première extrémité des conducteurs espacés (2.2) et entre la deuxième prise et la deuxième extrémité des conducteurs espacés (2.2), les conducteurs normaux (2.1) étant distribués sur les deux côtés des conducteurs espacés (2.2) ; la densité dans la partie intermédiaire de l'enroulement étant supérieure à celle des conducteurs normaux (2.1).

2. Enroulement sans noyau distribué centralement selon la revendication 1, dans lequel le nombre de conducteurs espacés (2.2) varie de 1/10 à 1/2 des conducteurs normaux (2.1).

3. Enroulement sans noyau distribué centralement selon la revendication 2, dans lequel le nombre de conducteurs espacés (2.2) est de préférence égal à 1/4 des conducteurs normaux (2.1) .

4. Enroulement sans noyau distribué centralement selon la revendication 1, dans lequel la densité des conducteurs (2.1, 2.2) de l'enroulement diminue progressivement du centre vers les deux côtés.

5. Enroulement sans noyau distribué centralement selon la revendication 1, dans lequel le nombre de conducteurs des conducteurs espacés (2.2) est directement proportionnel au diamètre interne de l'enroulement hélicoïdal.
